# EUROPEAN PATENT APPLICATION

(11) **EP 2 288 176 A2**
(43) Date of publication of application: **23.02.2011**
(21) Application number: 10181215.4
(22) Date of filing: 25.05.2001
(51) Int. Cl.: H04Q 11/00

(54) **Multiple access system for a communications network**

(30) Priority: 30.05.2000 US 584331; 12.03.2001 US 804316
(62) Divisional of application: 08164713.3
(71) Applicant: Nortel Networks Limited, St. Laurent, QC H4S 2A9 (CA)
(72) Inventor: Unitt, Brian, Bishop's Stortford, Hertfordshire CM23 2QN (GB); Grant, Michael, Bishops's Stortford, Hertfordshire CM23 4JP (GB); Tate, Christopher, Bishop's Stortford, Hertfordshire CM23 4JU (GB); Wallace, Andrew, Harlow, Essex CM17 9PF (GB); Algie, Glen, Ottawa Ontario K1V 7H9 (CA)
(74) Representative: Portch, Daniel

(57) **Abstract**

A communications network (e.g. fibre to the home (FTTH) or wireless) comprises a head end, to which outstations are coupled via a shared point-to-muttipoint medium. The head end is arranged to transmit downstream to the outstations a sequence of frames comprising data frames and command frames. The command frames marshal control of upstream transmissions from the outstations. A first downstream command frame directed to a specific outstation indicates the beginning of a timeslot, and also indicates the time slot duration (including an indefinite duration). Where the duration is indefinite, a second command frame directed to at least the same outstation indicates the end of the allotted time slot. Further methods are provided to optimise timeslot allocation, and to support addition and removal of outstations on the network.

## Description

### FIELD OF THE INVENTION

The present invention relates to access networks and to methods of carrying traffic over such networks.

### BACKGROUND OF THE INVENTION

Traditional access networks, servicing residential and small business customers have typically employed optical fibre transmissions to a head end from which customers are served via local distribution units. In the past, the final drop to the customer from the distribution point has comprised a twisted pair copper loop. In many cases this copper loop has previously been installed for telephony purposes.

More recently Introduced systems employ optical transmission between the head end and the distribution point, and there is now a incentive to extend the optical transmission path to the customer so as to provide fibre to the home (FTTH). Such a configuration has the advantage of overcoming the severe bandwidth limitations of the copper loop by replacing that loop with a broadband optical path.

In a typical passive optical network providing fibre to the home, a head end or central office, which is typically located at the network operator's local point of presence, is connected to a number of outstations via a fibre network. A single fibre connection links the head end to a passive optical splitter which divides the optical power equally between a number of fibres, each of which terminates at an outstation. Signals sent downstream from the head end arrive at a reduced power level at all outstations. Each outstation converts the optical signal to an electrical signal and decodes the information. The information includes addressing information which identifies which components of the Information flow are intended for a particular outstation. In the upstream direction, each outstation is allocated a time interval during which it is permitted to impress an optical signal on the upstream fibre. The fibres from all outstations are combined at the optical splitter and,pass over the common fibre link to the head end. Signals sourced from any outstation propagate only to the head end. The upstream network may use separate fibre links and splitter, or may use the same network as the downstream direction but using a different optical wavelength. A protocol for organising traffic to and from each outstation, known as the FSAN (Full Service Access Network, ITU specification G.983.1), protocol, has been introduced for this purpose.

Typically, the propagation delay of the optical paths between the head end and each outstation will differ. To prevent collisions on the upstream path, the protocol must allow for this, either by creating a guard band between transmission opportunities for different outstations, or by causing each outstation to build out the optical path delay to a common value by adding delay in the electrical domain. This latter approach has been adopted by FSAN.

FSAN is a relatively complex protocol, requiring large scale integrated circuit technology in a practical system. Such Integrated circuits are specialised for the PON application and are therefore costly because of the relatively small volumes used.

A further disadvantage of the FSAN protocol is that it employs asynchronous transfer mode (ATM) transport of traffic. Most, if not all, of this traffic will be internet Protocol (IP) packet traffic. These iP packets are of variable length, and can be as long as about 1500 bytes. Adaptation of this packet traffic into fixed length ATM cells requires the provision of interfaces for segmentation and subsequent reassembly of the IP packets. This requirement adds further to the cost and complexity of the installed system.

It is also known to construct wireless access networks (for example Fixed Wireless Access and Cellular Access) to provide customer network access where construction of wireline access networks is impractical or for other reasons. Whilst bandwidth in wireless systems may be considerably less than that of optical fibre access networks, both are examples of networks In which a head-end makes use of a multi-cast downstream communication medium, whilst multiple outstations share an upstream communications medium to the head-end. Such networks therefore share with optical networks the problems associated with differing path lengths between head-end and each outstation and of sharing a common upstream medium.

### OBJECT OF THE INVENTION

It is an object of the present Invention to provide apparatus, methods, software, and signals which mitigate one or more of the problems associated with the prior art.

### SUMMARY OF THE INVENTION

According to a first aspect of the present invention there is provided a method of marshalling upstream communication from a plurality of outstations to a head end in a communications network, the method comprising the steps of: sending from the head end a first command directed to a selected outstation allowing that one selected outstation to commence Its upstream transmission for a time period indicated by the command; and, at least where the time period indicated is of indefinite duration, sending from the head end a second command directed at least to the selected outstation and indicating that the selected outstation should suspend transmission.

In a preferred embodiment, the time period is not indefinite.

Preferably, the second command is a command to aii outstations to suspend transmission for a predetermined period.

Preferably, the second command is accompanied by a multicast address.

In a preferred embodiment, the first command to the selected outstation comprises a command to that outstation to pause its upstream transmission for a zero time period.

In a preferred embodiment, the first command comprises a command to the selected outstation to pause its upstream transmission for a non-zero time period, and where the non-zero time period allows components In the transmission path to adapt to the operating conditions specific to the selected outstation before transmission of data commences.

In a further preferred embodiment, transmission of data frames downstream is inhibited when there is insufficient time to transmit a further data frame before a next of the command frames is scheduled to be transmitted.

In a further preferred embodiment, upstream and downstream traffic have differing transmission rates.

In a further preferred embodiment, upstream and downstream transmissions are carried on a guided medium.

In a preferred embodiment, the guided medium is an optical medium.

Preferably, different optical wavelengths are employed for respective downstream and upstream transmission.

In a preferred embodiment, downstream and upstream transmissions are carried as free space wireless transmissions.

In a further preferred embodiment, a shared timeslot is occasionally allocated in common to all outstations and during which outstations may register with the head end.

In a further preferred embodiment, the timing of a downstream command frame is determined responsive to a upstream command frame received from outstation and indicative of the volume of traffic available for upstream transmission from that outstation

In a preferred embodiment, the upstream command frame is indicative of the outstation currently having no more data to transmit.

In a further preferred embodiment, the upstream command frame is indicative of the outstation currently having more data to transmit than can be transmitted in the current timeslot.

In a further preferred embodiment, the duration of upstream timeslots is determined at the head end responsive to a upstream command frame received from an outstation and indicative of a measure of volume of traffic for upstream transmission from that outstation.

In a further preferred embodiment, the second command is indicative of a second time period during which the outstation to which It is directed should suspend transmission.

In a further preferred embodiment, the second time period is indefinite.

According to a further aspect of the present invention there is provided a communications network comprising a head end coupled by respective communications paths to a plurality of outstations, in which the head end has means for marshalling upstream communications from the outstations via the transmission of downstream commands, which commands comprise a first command to a selected outstation allowing that one selected outstation to commence its upstream transmission for a time period indicated by the command followed, at least where the time period indicated Is of indefinite duration, by a second command directed at least to the selected outstation and indicating that the selected outstation should suspend transmission.

In a referred embodiment, the time period is not indefinite.

In a further preferred embodiment, the second command is a command to all outstations to suspend transmission for a predetermined period.

In a further preferred embodiment, the second command is accompanied by a multicast address,

In a further preferred embodiment, the first command to the selected outstation comprises a command to that outstation to pause its upstream transmission for a zero time period.

In a further referred embodiment, the first command comprises a command to the selected outstation to pause its upstream transmission for a non-zero time period, and where the non-zero time period allows components in the transmission path to adapt to the operating conditions specific to the selected outstation before transmission of data commences.

In a preferred embodiment, upstream and downstream transmissions are carried on a guided medium.

In a preferred embodiment, the guided medium is an optical medium.

In a further preferred embodiment, different optical wavelengths are employed for respective downstream and upstream transmission.

In a further preferred embodiment, downstream and upstream transmissions are carried as free space wireless transmissions.

According to a further aspect of the present invention there is provided a head end for a communications access network and arranged to provide marshalling of upstream communication from outstations coupled to the access network, the head end being arranged to transmit downstream to the outstations, information frames containing data traffic and command frames for marshalling upstream transmissions from the outstations which commands comprise a first command to a selected outstation allowing that one selected outstation to commence its upstream transmission for a time period indicated by the command followed, at least where the time period indicated is of indefinite duration, by a second command directed at least to the selected outstation and indicating that the selected outstation should suspend transmission.

According to a further aspect of the present invention there is provided software In machine readable form for performing a method of marshalling upstream communications from a plurality of outstations to a head end in a communications network, the method comprising; sending from the head end a first command directed to a selected outstation allowing that one selected outstation to commence its upstream transmission for a time period indicated by the command; and, at least where the time period indicated is of indefinite duration, sending from the head end a second command directed at least to the selected outstation and indicating that the selected outstation should suspend transmission.

According to a further aspect of the present invention there is provided medium access logic for a communications network arranged to receive at a first port a request to send a command to a selected outstation to allow it to commence transmission, and at a second port to cause the command to be sent to the selected outstation to begin transmission for a time period responsive thereto.

In a preferred embodiment, the command is directed to multiple outstations by means of a multicast address.

In a further preferred embodiment, the command is an Ethernet protocol command.

According to a further aspect of the present invention there is provided a downstream signal in a communications network comprising a head end and a plurality of outstations, the signal comprising a first command directed to a selected outstations allowing that one selected outstation to commence its upstream transmission for a time period indicated by the command; and, at least where the time period indicated is of indefinite duration, a second command directed at least to the selected outstation and indicating that the selected outstation should suspend transmission.

According to a further aspect of the present invention there is provided an outstation for a communication access network arranged: to receive a first command directed to the outstation and commencing upstream transmission responsive thereto for no longer than a time period indicated by the command; and at least where the time period indicated is of indefinite duration, to receive a second command directed at least to the outstation and suspending transmission responsive thereto.

In a preferred embodiment, the outstation is arranged to transmit responsive to the first, and optionally the second, command frame a command indicative of measure of volume of traffic for upstream transmission.

According to a further aspect of the invention, there is provided a method of marshalling upstream communications from a plurality of outstations to a head end in a communications network, the method comprising; sending from the head end to the outstations a global command allowing no outstation to transmit to the head end for a pre-set period, and, within that pre-set period, sending a further command to a selected outstation overriding said global command allowing that one selected outstation to transmit to the head end.

According to a further aspect of the invention, there is provided a method of marshalling upstream communications to a head end from a plurality of outstations In a communications network, the method comprising transmitting downstream, from the head end to the outstations, information frames containing data traffic and command frames, wherein alternate command frames contain, a global command to all outstations to pause upstream transmission for a pre-set time period, and a command to a selected outstation overriding said global command to commence upstream transmission.

According to another aspect of the invention, there is provided a method of marshalling upstream communications to a head end from a plurality of outstations in a communications network, the method comprising transmitting downstream, from the head end a first global command to all outstations to pause upstream transmission for a pre-set time period, and, within said preset time period, sending a further command to a selected outstation overriding said global command allowing that one selected outstation to transmit to the head end.

According to another aspect of the invention, there is provided a communications network comprising a head end coupled by respective communications paths to a plurality of outstations, wherein the head end has means for marshalling upstream communications from said outstations via the transmission of downstream commands, which commands comprise global commands allowing no outstation to transmit to the head end for a pre-set period, each said global command being followed within that pre-set period by a further command to a selected outstation overriding said global command allowing that one selected outstation to transmit to the head end.

According to a further aspect of the Invention, there is provided a communications network comprising a head end coupled by a passive optical fibre network paths to a plurality of outstations, wherein the head end is arranged to transmit downstream to the outstations, information frames containing data traffic and command frames for marshalling upstream transmissions from the outstations, wherein alternate command frames contain, a command to all outstations to pause upstream transmission for a pre-set time period, and a command to a selected outstation to commence upstream transmission.

According to a further aspect of the invention, there is provided a communications access network comprising, a head end, and a plurality of outstations coupled to the head end via an optical fibre medium incorporating a star copier or splitter, wherein said head end is arranged to transmit downstream to the outstation a sequence of frames comprising data frames-and command frames, wherein said command frames comprise first and second frames and provide marshalling control of upstream transmissions from the outstations, wherein the first command frame incorporates a global command to all outstations to pause upstream transmission for a pre-set time period, and wherein the second command frame is transmitted within said pre-set period and incorporates a further pause command having an associated zero time period and addressed to a selected outstation overriding said global command and allowing that one selected outstation to transmit to the head end.

In another embodiment, the further command may comprise a pause command, to the selected one outstation, and having a non-zero time period associated therewith. The non-zero time period allows components in the transmission path to adapt to the operating conditions specific to said selected one outstation before transmission of data commences.

According to another aspect of the invention, there is provided a head end for a communications access network and arranged to provide marshalling of upstream communications from outstations coupled to the access network, the head end being arranged to transmit downstream to the outstations, information frames containing data traffic and command frames for marshalling upstream transmissions from the outstations, wherein alternate command frames contain respectively, a global command to all outstations to pause upstream transmission for a pre-set time period, and a command addressed to a selected outstation overriding said global command and allowing that one selected outstation to transmit to the head end.

The invention is addressed to shared medium access networks including, for example, guided media such as fibre to the user (FTTU), and free space wireless access networks. In the optical context, such an arrangement has the particular advantage of providing a fibre to the home access network in the form of a passive optical network (PON) so as to avoid the need to provide a prior supply in the local distribution unit.

It may be noted this technique has features in common with Ethernet, but it will be observed that whereas Ethernet is an established protocol used in computer local area networks, it is concerned exclusively with point to point communication whereas the present invention is concerned with point to multl-point arrangements. Moreover, current implementations of Gigabit Ethernet (GbE) use point to point optical links to a 'repeater' at the logical hub of the network. The repeater demodulates incoming signals from the point to point links and directs traffic to one or more of the output channels, The disadvantage with this system is that it requires active electronics and an associated power supply in the repeater which is not compatible with operator requirements to remove active electronics from street locations.

In a preferred embodiment of the invention, a protocol is employed to control point to multi-point communication over the passive optical network so as to prevent collision or contention of upstream communications from customer terminals to the system head end. We have found that the adaptation of Gigabit Ethernet technology to operate over a shared access FTTH network provides significant cost advantages over an FSAN PON. Furthermore, since an increasing proportion of network traffic is based on the internet Protocol, which typically requires relatively long packets, further cost savings accrue by avoiding the packet segmentation and re-assembly processes that are required to make use of the short packet structure of an FSAN PON.

Gigabit Ethernet includes a flow control facility, intended to restrict the amount of traffic being sent to a node when the node is not in a position to process the incoming information. When this situation arises, a node sends to its peer a 'Pause control frame'. Control frames take priority over queued data frames and the pause control frame is transmitted as soon as any current data frame transmission has finished. The pause control frame contains a data value representing a time interval. On receipt, the peer node completes transmission of any current frame but then waits for the specified time Interval before restarting transmissions. The header of the pause control frame carries an address field and a type indicator field which identify to the peer the frame type. The operation of this flow control system is detailed In IEEE standard 802.3.

Advantageously, we make use of large scale integrated circuits designed for the Gigabit Ethernet protocol, but using a point to multi-point passive optical network instead of the point to point network for which the circuits were designed. In the downstream direction, traffic from a Gigabit Ethernet media access controller (MAC) is broadcast to all outstations via a passive optical splitter and the interconnecting fibres. Each outstation MAC recognises traffic Intended for locally connected equipment by matching the destination address carried in the header of downstream frames. In the upstream direction, each outstation employs a GbE MAC to generate upstream traffic. To prevent multiple outstations transmitting simultaneously, we use pause control frames to allocate 'permission to transmit' to each outstation in turn. This enables successful decoding at the system head end. Each outstation is allocated a portion of the total traffic capacity. In a further embodiment, the capacity allocated to each outstation can be varied depending on Its specified quality of service or actual need.

Inefficiencies are introduced in the upstream transmission path because of the varying optical path lengths between the head end and Individual outstations. A characteristic of FTTN networks is that customers tend to exist in groups situated geographically close to each other (say, within a few hundred metres), but the head end (or central office) may be some kilometres away. We exploit this observation to increase the overall transmission capacity.

The invention also provides for a system for the purposes of digital signal processing which comprises one or more instances of apparatus embodying the present Invention, together with other additional apparatus.

There is rapidly rising interest in fibre in the loop solutions. Multiple access networks allow fibre and exchange end equipment to be shared across groups of end customers, resulting In a more cost effective infrastructure. Our arrangement and method allows a multiple access network to be built without the need for active electronics in street locations. A network requiring only passive elements in outside locations is attractive, particularly to incumbent network operators who traditionally have not used active street equipment.

Further use of the present invention in areas of application other than optical access networks helps provide Increased technical benefit from the invention over a wide range of shared medium access networks, allowing reuse of essential designs and components.

The Invention is also directed to medium access logic for a communications network arranged to receive at a first port a send pause request and at a second port to cause a command to be sent to a remote station to pause transmission for a time period responsive thereto. The command may be directed to multiple outstations by means of a multicast address. In a preferred embodiment, the medium access logic embodies the Ethernet protocol, modified to support receipt of the send pause request. Typically such medium access logic may be provided, for example, in the form of a chip or chip set (for example an Ethernet switch, MAC chip or ASIC).

The invention is also directed to software in a machine readable form for the control and operation of all aspects of the invention as disclosed.

Reference is here directed to our co-pending application (09/584,330) of 30 May 2000, the contents of which are incorporated herein by reference.

The preferred features may be combined as appropriate, as would be apparent to a skilled person, and may be combined with any of the aspects of the invention.

Other aspects and features of the present invention will become apparent to those ordinarlly skilled in the art upon review of the following description of specific embodiments of the Invention in conjunction with the accompanying figures.

The specific embodiments of the invention given below are based on the use of the Ethernet protocol over an optical fibre transmission system. It will be evident to those skilled In the art of communications technology that the methods described can also be applied to other guided transmission medium systems, such as coaxial cable and twisted copper pair cable, and also to free space transmission using electromagnetic waves, such as radio and free space optical transmission. Similarly, protocols other than Ethernet can be used.

### BRIEF DESCRIPTION OF THE DRAWINGS

In order to show how the invention may be carried into effect, embodiments of the invention are now described below by way of example only and with reference to the accompanying figures in which:
Figure 1 shows a schematic diagram of a passive optical access network (PON) in accordance with a preferred embodiment of the present invention;
Figure 2 shows the structure of a downstream data frame;
Figure 3 shows the structure of a downstream command or pause frame; and
Figure 4 is a flow chart illustrating the use of a multiple access algorithm in the network of figure 1 to marshal upstream transmissions;
Figure 5 shows a schematic diagram of a wireless access network In accordance with a preferred embodiment of the present invention;
Figure 6 shows a schematic timing diagram of downstream and upstream data paths In accordance with the present invention;
Figure 7 is a flow chart illustrating the use of an Xon timer in the network of Figure 1 or Figure 5 to control upstream transmissions;
Figure 8 shows a possible structure of a command frame in accordance with the present invention;
Figure 9 is a flow chart illustrating how the sending of downstream command frames may be controlled at the head end;
Figure 10 is a flow chart illustrating the use, at the head end, of upstream burst delimiter command frames;
Figure 11 shows a schematic diagram of the structure of an outstation In accordance with the present invention.

### DETAINED DESCRIPTION OF PREFERED EMBODIMENTS

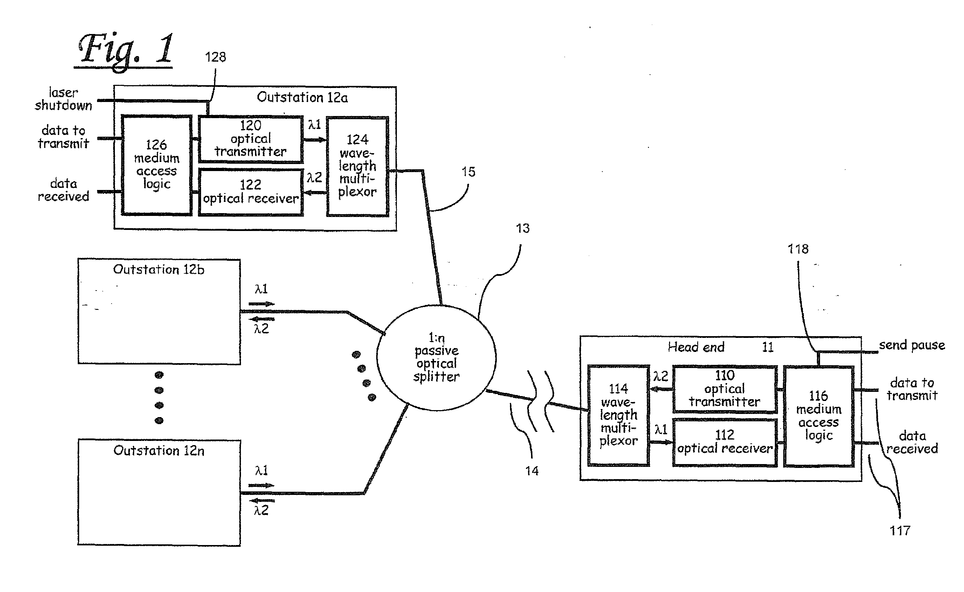

Referring first to figure 1, this shows in schematic form an exemplary FTTH access network in which a head end 11 is connected to a number of customer terminals or outstations 12a-12n through a 1:n passive optical splitter 13 via respective optical fibre paths 14 and 15. Typically, the distance from the head end to the splitter is up to around 5 km. The distance between any two outstations is assumed to be relatively small, typically about 500 m. The splitter 13 is located at a convenient point in the street and requires no power supply. In the system illustrated, downstream and upstream traffic use the same fibres and splitter, but each direction uses a different optical wavelength. Optionally, the network may use separate fibres and splitters for each direction of transmission.

As shown in figure 1, the head' end 11 comprises an optical transmitter 110, typically a laser, operating at a first wavelength λ₁, and an optical receiver 112 operating at a second wavelength λ₂, The transmitter and receiver are coupled to fibre 14 via a wavelength multiplexer 114 so as to provide bi-directional optical transmission.

The transmitter and receiver are electrically coupled to control logic circuit 116, which circuit provides an interface 117 with an external network (not shown) to receive data to be transmitted downstream to the outstations 12a-12n and to transmit to the external network upstream data received from those outstations.

Each outstation comprise an optical transmitter 120 operating at a the second wavelength λ₂, and an optical receiver 122 operating at the first wavelength λ₁, The transmitter and receiver are coupled to fibre 15 via a wavelength multiplexer 124.

Since the optical path between an outstation and the head end passes through the splitter 13 in each direction, the optical transmission path has higher loss than in a simple point to point arrangement. To compensate for this transmission loss, the head end can be equipped with a powerful laser transmitter 110 and a sensitive receiver 112. Preferably the outstation electro-optics should be based on standard Gigabit Ethernet modules to minimise cost and to minimise the risk of danger from eye exposure at the customer premises.

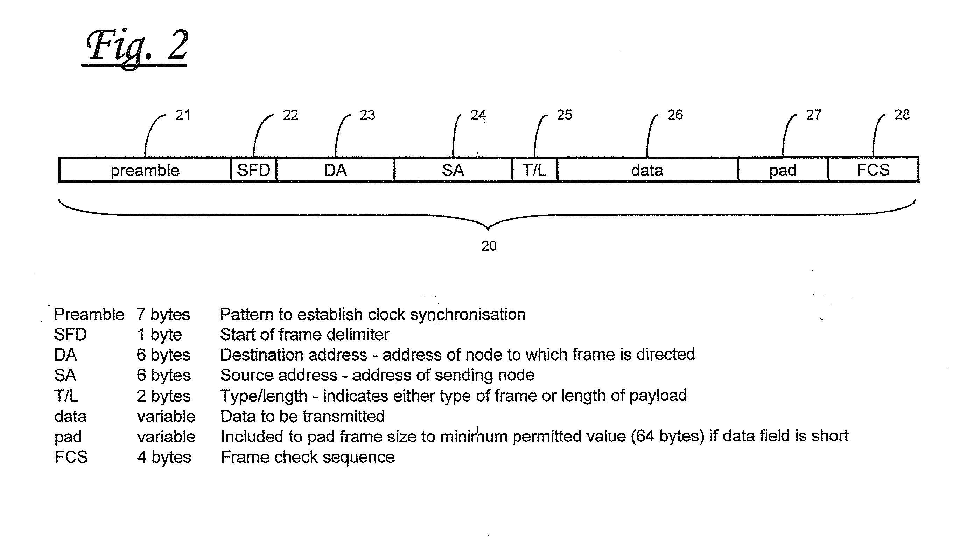

Information frames sent by the head end optical transmitter are broadcast (or multicast) to all outstations via the optical splitter. The structure of a typical Information frame 20, as illustrated in Figure 2, comprises a preamble 21, a start of frame delimiter (SFD) 22, a destination address 23 of the outstation for which the message is Intended, and a data payload 26. The frame also includes the source address 24 of the sending node, a type/length field 25 indicating either the frame type or the payload length, and a frame check sequence 28. The payload may also include padding 27 if the data length is insufficient to fill the payload space.

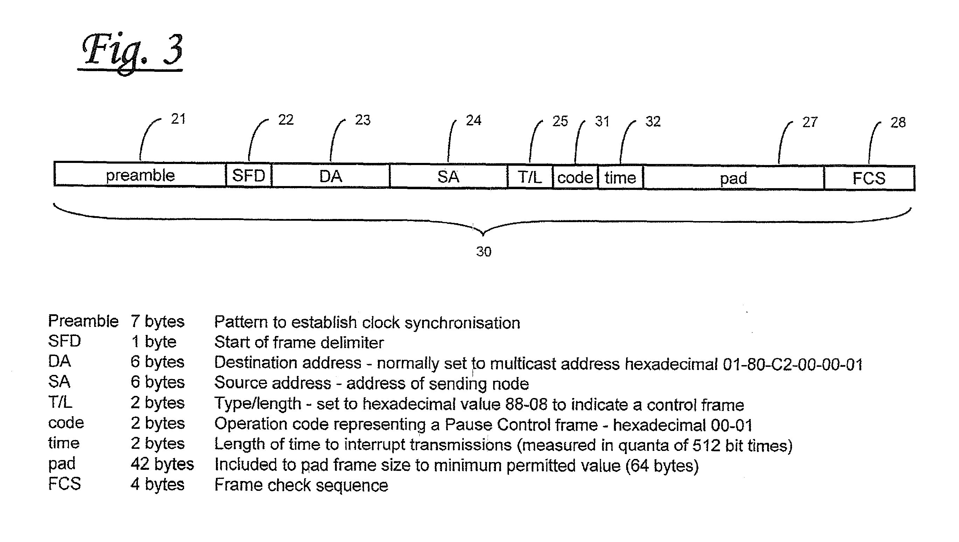

Periodically, these information frames are interspersed with pause control frames generated under control of the head end. The structure of a pause control frame 30 is illustrated in Figure 3. As shown In Figure 3, then pause frame structure is similar to that of the data frame described above with the exception the type/length field 25, which is set to a value indicative of a control frame, is followed by a code field 31 representing a pause command and a time field 32 denoting the length of the pause. The specified pause time can be a pre-set value or zero, and pause frames sent before a previously specified pause time has expired cause any outstanding time interval to be over-ridden.

Figure 1 illustrates a hardware connection or send pause input 118 to the head end control or medium access logic (MAC) 116 from which transmission of a pause frame can be initiated. This function could also be achieved by software access to an internal control register.

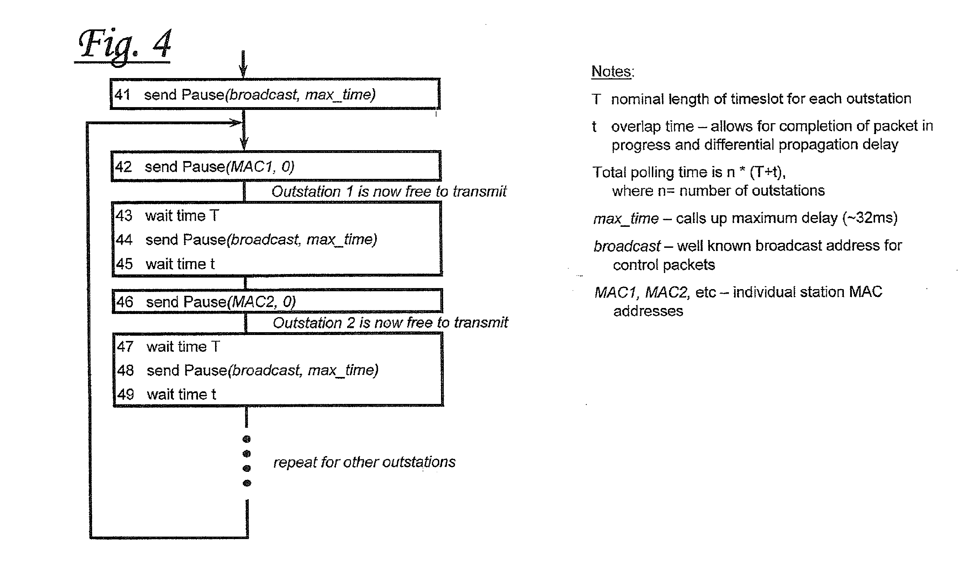

Referring now to Figure 4, the pause mechanism is used herein as a means to achieve marshalling and interleaving of upstream transmissions from the outstation connected to the passive spatter. All outstations are, in principle, able to transmit simultaneously. This is prevented by sending 41, 48 a global pause command to all outstations. Conveniently, this can be done by generating a pause frame containing a well known broadcast address and specifying a 'long' time interval, where 'long' represents a value which will cause any outstation to cease transmission for a time period that is longer that the desired active slot time for any outstation. The head end allows a 'guard time' which is long enough to ensure that any frame which is already being transmitted has time to complete and upstream signals already on the medium propagate beyond the splitter point. The head end then issues its next pause command 42 containing the individual MAC address of that one of the outstations which is to be allowed to transmit, and specifying a pause time interval equal to a previously determined 'adaptation time', The pause frame addressed to an individual MAC address is referred to as a 'directed pause frame'. This overrides the previous pause command for that outstation and, once the adaptation time interval has expired, causes any frames queued at the selected outstation to be sent on the medium and subsequently received at the head end. Transmissions from other outstations are inhibited because of the unexpired pause time from the previous pause command 41, 48, Following the desired active slot time, the head end again issues a global pause command 48 and the process repeats for, each of the remaining outstations, Effectively, the head end issues in alternate time periods global pause commands which allow no outstation to transmit to the head end, and individual pause commands which allow one selected outstation to transmit to the head end. Advantageously, the method steps illustrated in Figure 4 may be carried out via a processor programmed with software instructions.

In a conventional Gigabit Ethernet using a point to point protocol, each optical transmitter remains active even during gaps between frame transmissions, and during pause intervals, when an 'idle' pattern is transmitted to maintain clock synchronisation at the receiver. In the multiple access system described herein, transmission of idle patterns during pause intervals is suppressed to avoid interference with frame transmissions from the active outstation. A control or laser shutdown input 128 to turn off the transmitting laser in the outstation is shown In Figure 1 for this purpose. This control input can be driven either from real time software running in the outstation's node processor, or can be derived from additional hardware in the outstation.

The adaptation time iritenral_is included to assist in control of the outstation laser (via laser shutdown input 128) and establishing a reliable-optlcal connection to the newly enabled outstation, On receipt-of a global pause command, control logic in an outstation is arranged to turn off the outstation laser transmitter once any currently transmitting frame has finished. The outstation MAC will continue to generate the idle pattern, but this pattern will not be impressed on the optical medium since the laser is now turned off. When a subsequent directed pause frame is received, the outstation control logic turns on the laser transmitter immediately. The Ethernet MAC function will continue to source idle patterns, since it is still inhibited from transmitting until the adaptation time has expired. The adaptation time Interval allows the operating point of the outstation laser to stabilize, the head end receiver to adapt to the new optical signal level (which may differ between outstations because of laser tolerance and differences in path attenuation) and the receiver clock acquisition circuit to lock to the frequency and phase of the new outstation.

Several elements contribute to the guard time that is required to prevent potential collisions. These elements include uncertainty in the launch time of the downstream pause frame, because this frame must wait for completion of any data frame already started. There is also uncertainty In the time at which transmission from an active outstation will cease, again, because it must wait for completion of anv data frame In procress. There is also the differential propagation delay between outstations which will cause pause control frames to be received at different outstations at different times due to differing propagation delays. Optionally, the impact of differential propagation delay can be reduced by restricting the physical differential path length to different outstations.

The total time to interrogate all outstations is a compromise between the additional delay introduced by the multiple access mechanism and Inefficiencies arising from the guard time. We have found for example that, in a network with 16 outstations, an active slot time of 200 microseconds with a guard band of 40 microseconds and an adaptation time of 10 microseconds leads to a total polling interval of 4 milliseconds and an efficiency of 80% relative to standard point to point full duplex Ethernet. A bounded polling Interval together with a minimum guaranteed slot time allow traffic contracts based on specified quality of service.

Optionally, the length of each outstation's active time slot can be varied depending on the level of activity at that outstation and its contracted quality of service. Outstations which have been inactive for a significant length of time may be polled less frequently until new activity Is detected, maybe every 100 milliseconds, or longer if it is deemed that the outstation has been turned off or disconnected. These enhancements increase-efficiency at low load and allow unused traffic capacity to be reallocated-to active outstations which can therefore achieve a higher burst rate.

When a new outstation is switched on and connected to the network, preferably its optical transmitter should be inhibited until the receive channel has a chance to synchronise with the downstream transmissions from the head end so as to avoid corrupting timeslots allocated to other outstations before receiving a global pause command from the head end.

To increase the downstream capacity of the network, either initially or as an upgrade to an existing network, traffic In the downstream direction may use multiple wavelengths, each wavelength being detected at one or more outstations using wavelength selective filters or couplers Installed either In the outstations or at the coupler site. In this way, an asymmetrical network is generated, having higher capacity in the downstream direction. Pause frames would be launched on all active wavelengths to ensure all outstations receive timely pause commands.

As discussed above, it is preferred to employ separate wavelengths for upstream and downstream transmission to allow transmissions from the head end to be removed from the collision domain. The network can then work In full duplex, where downstream transmissions take place concurrently with upstream.

Optionally, the head end can be connected to the star coupler 13 using a single optical fibre (instead of a fibre pair) by adding wavelength multiplexers at each end of the fibre connection.

In a preferred implementation, a. global pause command Is used to turn off all outstations following an active transmission slot. This has the advantage of increasing system robustness since, If a 'turn off' pause command is corrupted and the currently active outstation continues to transmit beyond its allocated transmission slot, it is likely to cause corruption of data transfer from the outstation to which the next transmission slot is allocated, However, once this subsequent slot is complete, a further global pause command will be sent which will again be interpreted by all outstations as a turn off' signal. Therefore, since it Is unlikely that multiple consecutive global pause commands will be corrupted, transmission disruption is confined to a small number of transmission slots.

Optionally, instead of using a global pause command to turn off all outstations at the end of an active slot, a directed pause could be employed, addressed to the outstation to be-turned off. Other outstations would remain turned off until their own directed pause time is overwritten by a directed pause frame containing the adaptation time. This is not the preferred implementation since the robustness of the system is reduced, However it allows the head end of the system to be implemented using standard Ethernet switch components with an external controller (such as a computer processor running a real time operating system) to generate the sequence of pause command frames. (It should be noted that some Ethernet components delete incomlng-pause frames carrying the standard multicast address. This prevents global pause commands traversing such components.)

Optionally, the relative timing of the pause command frames intended to stop a first outstation from transmitting and permit a second outstation to transmit may be adjusted to reduce the guard band needed between transmissions from the two outstations using knowledge of the differential distance from the head end to each of the outstations, Such knowledge can be derived from physical distance measurements or by measuring electronically the round trip time for signals sent from the head end and looped back from the outstation,

Optionally, transmission of data frames from the head end may be Inhibited when the time interval remaining before the next pause command frame is scheduled to be transmitted is less than the time needed to transmit a further data frame from the queue. This reduces the timing uncertainty arising from the need to wait for a current data frame to finish before a control frame can be transmitted and allows the size of the guard band to be reduced.

Optionally, downstream and upstream paths can operate at different bit rates, In residential applications, the required upstream transmission rate is often significantly lower than the required downstream rate. For example, downstream transmission may be based on 1 Gbit/s Ethernet and upstream transmission on 100 Mbit/s. In such circumstances, cost savings accrue from the reduced cost of upstream laser transmitters designed for lower bit rate operation and the associated reduction In optical power budget requirements.

Optionally, the outstation laser control logic may include a watchdog timer which turns off the transmitting laser after a predetermined time has elapsed following the receipt of a- pause, control frame addressed to that outstation, where the predetermined time interval is longer than the longest expected active transmission time slot. This limits corruption of upstream traffic from other outstations should the receive path to an outstation fail-during Its active time slot.

In practice, it is also possible for a contact wire to the outstation laser to break, leaving the-laser switched on (i,e. "laser-on" failure). The effects of such a failure may be instigated by adding a switch in the power supply path to the laser, and arranged to switch off the laser after a predetermined time relative to Its being switched on.

Conveniently, the head end may exert back pressure flow control on one or more outstation by increasing the adaptation time specified in the directed pause frame beyond that needed for components in the optical path to adjust to the operating conditions of the new outstation. This technique can be used to reduce congestion In the upstream path on the network side of the head end, or to throttle the amount of data the customer Is permitted to send, according to a service contract, if the outstation is arranged to prioritise upstream traffic such that high priority traffic is sent first, then throttling the upstream path using this technique will still allow high priority traffic to receive preferential treatment. (Methods for indicating traffic priority are well known and Include, for example, techniques specified in iEEE standard 802.1.) In the limit, if this adaptation time Is increased to be equal to or greater than the active slot time, that outstation will not be able to send any data in that specific transmission slot.

There remains the question of the introduction and attachment of a 'joiner" outstation into an existing access network as described, As previously mentioned, the head-end directs frames to the outstation by using its station MAC address as the frame destination MAC address. However, If a new outstation is attached, its station MAC address is not necessarily known at the head-end. It Is therefore desirable to provide a means by which the outstation station MAC address and other associated user Information can be automatically transferred to the head-end.

This Invention uses an additional upstream slot for the purpose of co-ordinating the introduction of a joiner outstation. This slot is provided using the same "pause" mechanism as that used to provide upstream time slots. Here the start of the slot will be Indicated by a pause frame with a specific destination MAC address recognised at each outstation which may also be a member of a predetermined multi-cast group. However, the control slot will normally only occur relatively Infrequently relative to the "round robin" cycle so as not to impact the efficiency of the PON significantly. This control slot is decoded by all outstations on the PON as an Indication that any new joiner is free to transmit. Only those outstations which have not been acknowledged as PON members shall use this slot. New Joiners will include outstations which: are programmed to Initial factory settings; have been moved from another PON; have been commanded to re-join the PON by the head-end. [it is possible that the joining procedure may be used following every Outstation Optical Network Unit (ONU) power-up cycle although this is not seen as necessary],

A preferred embodiment uses the complete control slot for the upstream transmission opportunity. A new joiner outstation must not turn on lts laser and transmit during the traffic related timeslots. The only time it is permitted to turn on its laser and transmit is during a control slot and only then under given conditions. When a joiner outstation receives the "pause" frame to Indicate the start of the control slot it does not necessarily transmit immediately, in order to reduce the conflict between outstations attempting to join the PON simultaneously, a pseudo-random algorithm is used to determine exactly when the outstation will transmit, The likelihood of transmission should be chosen to be relatively small since the system needs to cope with all members of a PON (say 16) attempting to join at the same time. In order to join the PON the outstation must send a "join" control frame to the head-end. This frame will automatically contain the station MAC address of the joining outstation and could also contain other information in the data payload if required for authentication. In response to the request to join, the outstation must validate and then acknowledge to the joiner station MAC address. This may or may not involve changing the time slot allocation frame to include an additional timeslot. If the outstation falls to receive a valid joiner acknowledgement frame within a given period of time it must then attempt to rejoin using a pseudo-random back-off time. A scheme known as "truncated binary exponential back-off" used in CSMA/CD half duplex Ethernet is suggested as follows:
- The back-off delay Is an Integer multiple of the slot time. The number of slot times to delay before the n-th retransmission attempt is chosen as a uniformly distributed random integer r in the range 0 ≤ r < 2k where k = min (n, 10)
in any case, the back-off time should be chosen so as to generally increase with the number of failed attempts in order to reduce congestion in the joiner control slot. The random number generation should also be chosen so as to minimise -number correlation between outstations. Encryption for security is optional,

A further enhancement is to allow multiple transmission opportunities within each control slot. This has the potential to allow more than one outstation to join during a single control timeslot and reduces the required number of control timeslots (and hence reduces the control slot overhead). As such, the control slot is subdivided into a number of smaller periods, or sub-timeslots, each of which Is an outstation transmission opportunity. In order to Implement this enhancement the outstation must autonomously turn on and extinguish its laser for a specific defined period within a control slot. Here, the outstation receives a pause frame indicating the start of the control timeslot and a timer (internal to each outstation) Is used to delimit the individual sub-timeslots.

Deregistration of an outstation by the headend may occur every time the outstation is switched off (detected, for example, by lack of response from that outstation over a relatively long predefined period) and re-registration may occur on each power-up. Where an outstation receives no indication of its allocation of a timeslot for a relatively long predetermined period, or is switched back on, it may assume that the head end has assumed it is has disconnected. The outstation then re-registers.

Whilst the foregoing description is given In terms of an optical network, it will be apparent that the Invention Is not limited in its application to such networks, It may also, for example, be applied to physical media such as wireless or high speed copper, in addition to optical media.

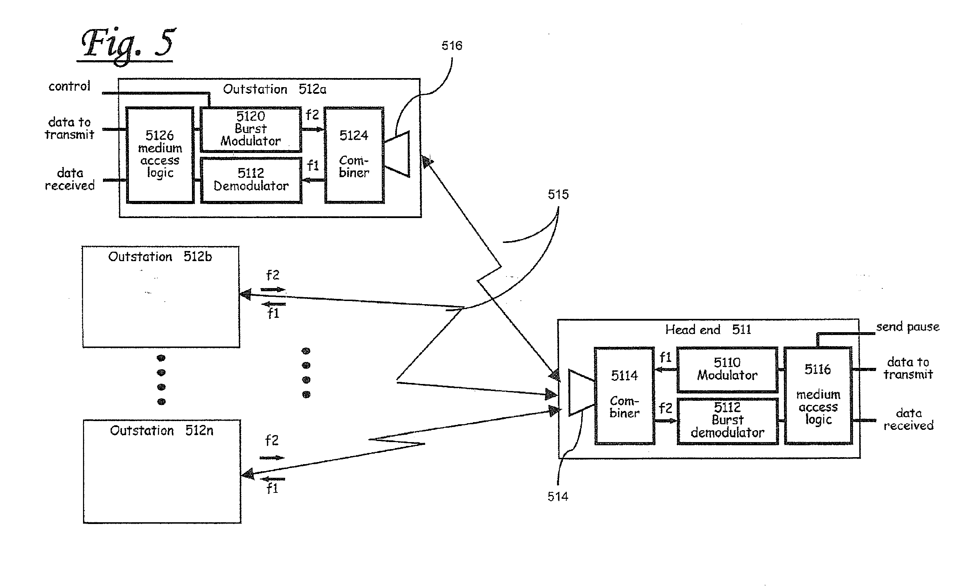

Referring now to Figure 5, this shows in schematic form an exemplary wireless access network, analogous to the optical access network of Figure 1, in which a head end 511 is connected to a number of customer terminals or outstations 512a-512n through a broadcast wireless path 515. The distance between any two outstations Is assumed to be relatively small, typically about 500 m, but may be greater. In the system illustrated, downstream and upstream traffic use different frequencies, f1 and f2.

As shown in figure 5, the head end 511 comprises a modulator 5110 operating at a full frequency f1 and an burst demodulator 5112 operating at a second frequency f2. The transmitter and receiver are coupled to antenna 514 via a combiner 5114 so as to provide bidirectional wireless transmission.

The transmitter and receiver are electrically coupled to control logic circuit 5116, which circuit provides an interface with an external network (not shown) to receive data to be transmitted downstream to the outstations 512a-512n and to transmit to the external-network upstream data received from those outstations,

Each outstation comprise an modulator 5120 operating at a the second frequency f2, and an burst demodulator 5112 operating at the first frequency f1. The modulator and demodulator are coupled to antenna 516 via a combiner 5124.

In this wireless embodiment, the total time to interrogate all outstations is again a compromise between the additional delay introduced by the multiple access mechanism and inefficiencies arising from the guard time. It is found for example that, In a network with 10 outstations, an active slot time of 1 millisecond with a guard band of 0.250 milliseconds leads to a total polling interval of 11.5 milliseconds and an efficiency of 80% relative to standard point to point full duplex Ethernet. A bounded polling interval together with a minimum guaranteed slot time allow traffic contracts based on specified quality of service.

In an alternative embodiment, rather than sending a multicast pause signal followed by a directed pause signal, each outstation is arranged to receive a directed command frame (a "directed burst" frame) comprising transmit duration.

On receipt of such a frame, the recipient outstation is permitted to transmit upstream for a period not exceeding that indicated in the command frame.

Whereas in the first embodiment described above, the outstation transmitters are by default "on" in the absence of a command signal from the head end to the contrary, In the second embodiment the outstation transmitters are by default in principle "off" (in practice on "stand'-by") in the absence of a command frame to the contrary.

The second embodiment has the added advantage of potentially requiring fewer downstream command frames per upstream time slot (I.e. one directed burst frame as opposed to a multicast pause plus a directed pause frame). This allows the "t" guard band to be further minimised since the transmitting outstation upstream Ethernet Mac scheduler can accurately shut down upstream, rather than additionally having to potentially spool a maximum size packet which, for example, on a 100Mbps fast Ethernet port adds 120 microsecond to "t", This in turn allows more outstations per shared upstream, and increases bandwidth efficiency, It is noted that both latency and jitter may be highly sensitive to the choice of the head end scheduler's "t" value. On 100Mbps links, the previously discussed guard bands become much more critical to the overall efficiency of the shared upstream bandwidth. The following items can reduce these guard bands significantly,

One can also mix the signals in the two methods, in appropriate ways, depending on the physical layer (PHY) transmission characteristics and the limitations of the Ethernet switching MAC layer specific to a equipment vendor. For example if it is easier for an ASIC vendor to leave the MAC normally "on", then the multicast pause signal to turn all outstations off periodically can be sent In combination with a directed burst control signal (as opposed to a directed pause signal) which still offers little "t" guard band reductions.

In a still further enhancement, a burst delimiter message is appended to a time sliced upstream burst at the outstation. This allows for more intelligent head end time slice scheduling based on feedback from the outstation. In general the upstream burst delimiter may contain information indicative of the volume of traffic - processed and/or pending - for upstream transmission since the last allocated time slot. The burst delimiter may be sent upon completion of the currently allocated time slot (or at the beginning of an allocated time slot). For example, the burst delimiter command frame may contain per Ethernet MAC upstream burst or running counter). Alternatively distinct command frames may be used each to indicate:
- an "end of burst" delimiter signal where available traffic for transmission upstream is less than the allocated time slot allows and
- a "more to burst" delimiter signal where the amount of traffic available for upstream transmission exceeds the allocated time slot.

Upstream transmission of such burst delimiter command frames allows the head end to dynamically resize upstream time slots allocated to outstations. This helps concentrate the complexity of scheduling In the head end rather than in the outstations, thereby reducing cost and complexity at the outstation, whilst maximising bandwidth efficiency at both high bit rates (e.g. 1000Mbps) and especially at lower bit rates (e.g. 100Mbps) of point to multipoint Ethernet first mile networks.

Specifically, in the case of a burst delimiter command frame indicative of an outstation having no more data to transmit upstream, the head end may react to an "end of burst" signal by immediately allocating a time slot to another outstation, thereby avoiding wasted upstream bandwidth when an outstation has no more traffic to transmit. The burst delimiter Information may-also be used at the head end to create a compiled history of the decision dynamics of a short term burst profile for each, or all outstations. The head end can then use a token debit/credit system for controlling committed and excessive outstation upstream fairness processing on next or future burst time slots allocated to outstations.

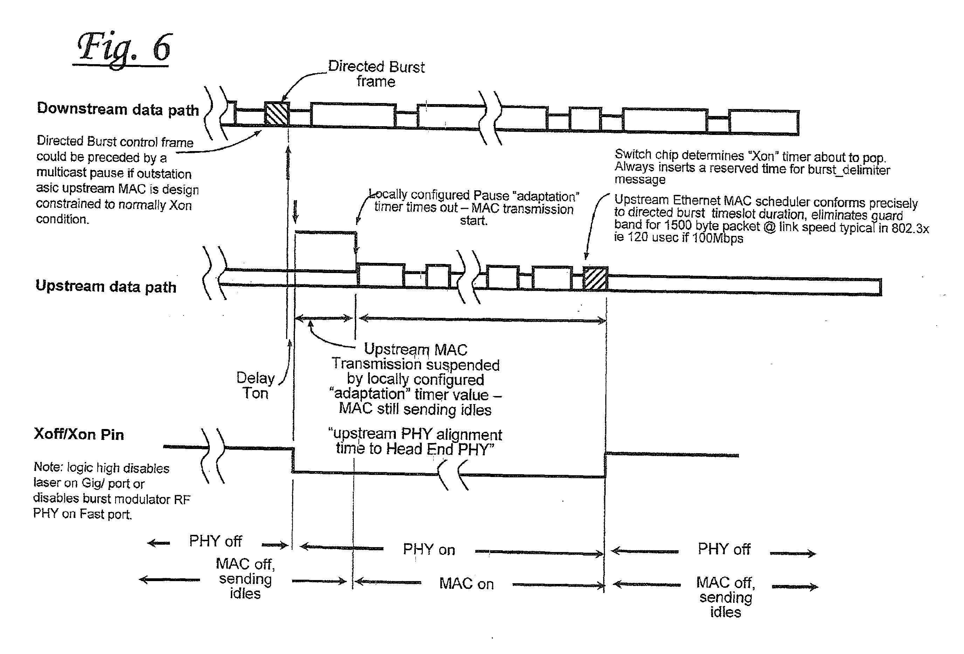

Referring now to Figure 6, the detailed operation of the method Is as follows. After a hard or soft reset, the initialised condition of PHY disable (Xon/Xoff) pin is 'logic high' (i.e. PHY is normally turned off).

Preferably, this 802.3x-like Burst PHY control method is enabled by setting a bit In an ASIC control register. When the feature is enabled by setting such a control bit, the initialised condition of laser disable is 'logic high' (that is, the laser Is turned off). The default (reset) state of the control bit should disable the laser control feature.

Preferably, a new Xon/Xoff PHY control pin on the Ethernet switch / MAC ASIC is reserved for this optional Burst PHY control feature. Preferably, an ASIC control specified Ethernet MAC port (Gigabit Ethernet or Fast Ethernet) for a multi-port switch ASIC arrangement. There is also an ASIC control register in which the Ethernet MAC port or the switch asic Ethernet MAC address can be set for the directed pause or burst control feature to use. This Burst PHY control feature makes use of a configurable ASIC control register for the adaptation timer value (rather than using directed pause timer as in Method B, this allows upstream scheduler to be more intelligent and enable a minimized "t" guard band by knowing ahead of time when the, end of transmission event will occur)

Upon directed_burst reception, the "Xon/Xoff" pin goes 'logic low' (i.e. Burst PHY is turned on), but upstream MAC transmission (to the Head End or wireless BTS) is suspended by a provisioned adaptation timer value (whose operation is similar to that described above for the pause-based method), where the MAC is still sending idles during this "upstream Burst PHY alignment time". When the provisioned adaptation timer expires, upstream MAC transmission is resumed and the directed burst timer value is now used as a "Xon" timer. Upon expiry of the directed burst "Xon" timer, the upstream MAC optionally appends a burst delimiter message - a feature which can be turned off or built in to an outstation's switch ASIC as needed - then enters the paused state.

The upstream MAC can also be disabled by means of a multicast pause with a non-zero timer value, When the upstream MAC transmit function is in the paused state, the MAC will transmit idle symbols as defined in the IEEE Gigabit Ethernet specification; similarly for the Fast Ethernet port. In this case, the burst PHY Xon/Xoff pin will be in a "logic high" state.

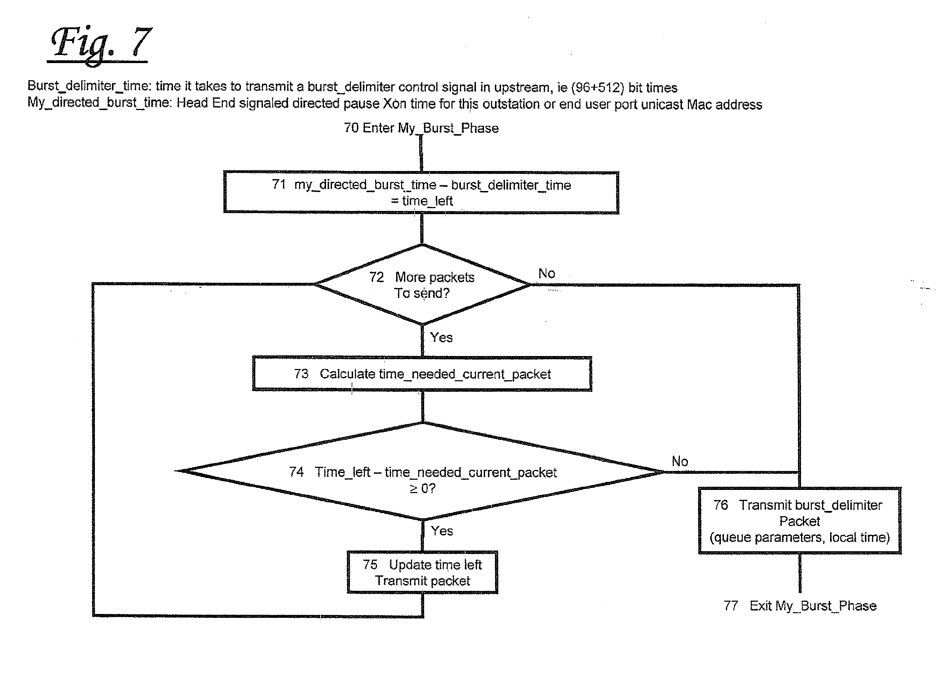

Delay "Ton" ls the processing time at the outstation for a directed_burst message Referring now to Figure 7, at the outstation upstream MAC egress port, before taking a packet off the egress queue destined for the upstream, each packet length shall be inspected and a determination made as to whether, given the upstream link speed (e.g. 100Mbps or 100OMbps), there is time to transmit the packet before the end of the signalled timeslot timer (signalled as the Xon timer in the directed_burst message) expires. Where appropriate, this calculation should also take into account the time required to append and transmit a burst_delimiter message as the final upstream packet.

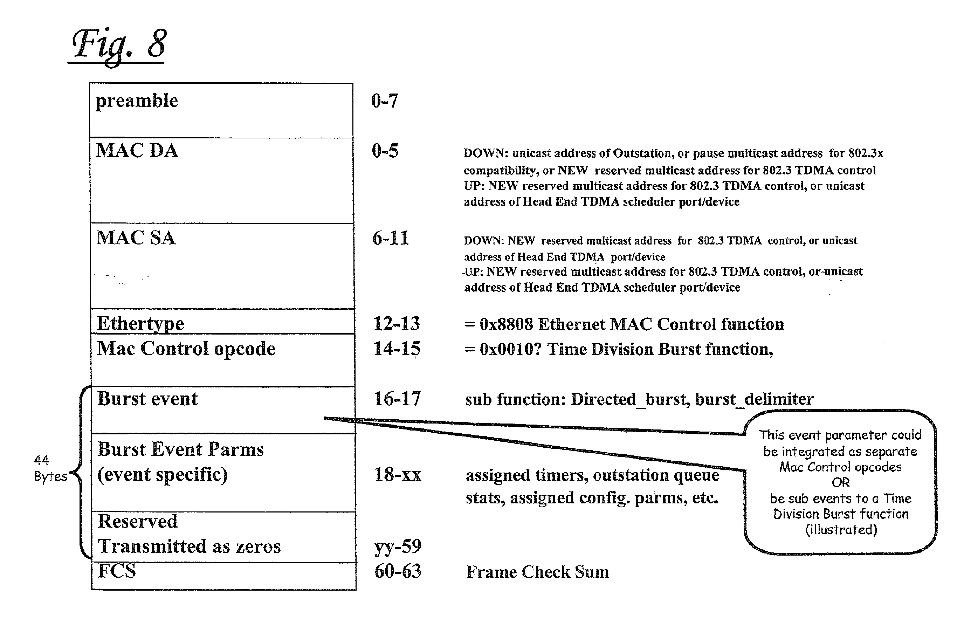

Referring now to Figure 8, there is shown the structure of a command frame format appropriate for carrying the necessary command frames In accordance with the present invention. The figure illustrates the component fields of the frame, the bits allocated per field, and the nature- of the Information carried in each field. The burst event field could alternatively be Integrated as separate Mac control operation codes, or be sub-events to a time division burst function as illustrated In Figure 8,

In addition to the above, the following features will improve the robustness of the protocol, but are not essential for its basic operation. Preferably, error conditions are readable by the attached node processor via bits in a status register. Optionally, when an error condition arises the MAC may generate an interrupt.

Preferably, there should be a read-only status bit asic register which Indicates that the MAC/Switch chip supports burst PHY control and it's current on/off condition.

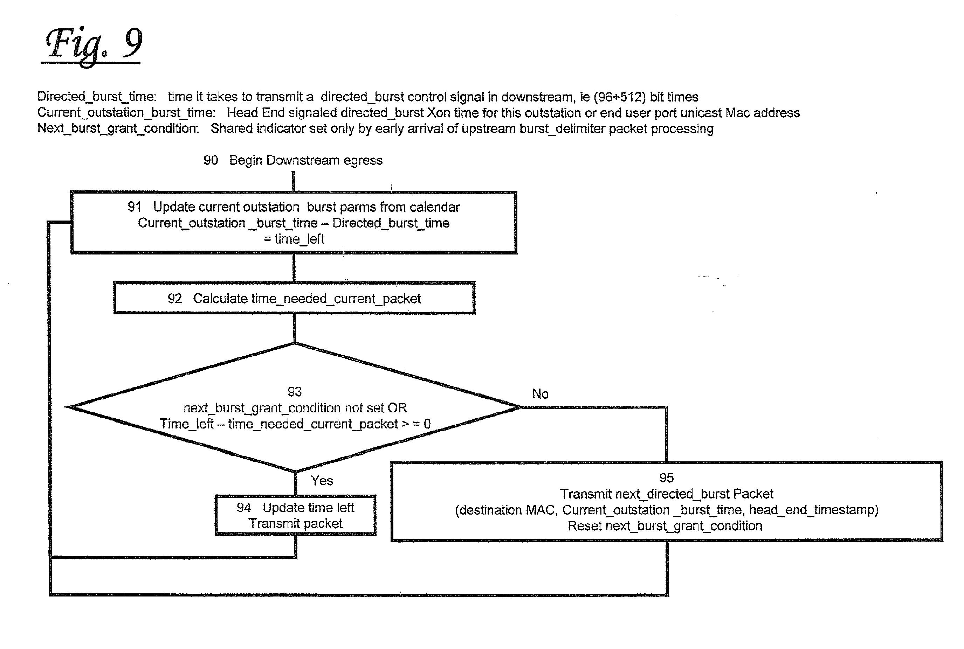

Referring now to Figure 9; it would be desirable for upstream bandwidth efficiency reasons that the head end downstream egress method utilize a similar optimization to that used at the outstation upstream egress method when Inserting a directed_burst command Into the downstream. To avoid the potential head end wait time to send a multicast pause plus a directed pause, or to send a directed burst command to an outstation, the downstream MAC may check the time required to send a directed burst local parameter before each packet is pulled off the egress queue for the downstream port, A head end downstream burst control flow Is given for reference purposes.

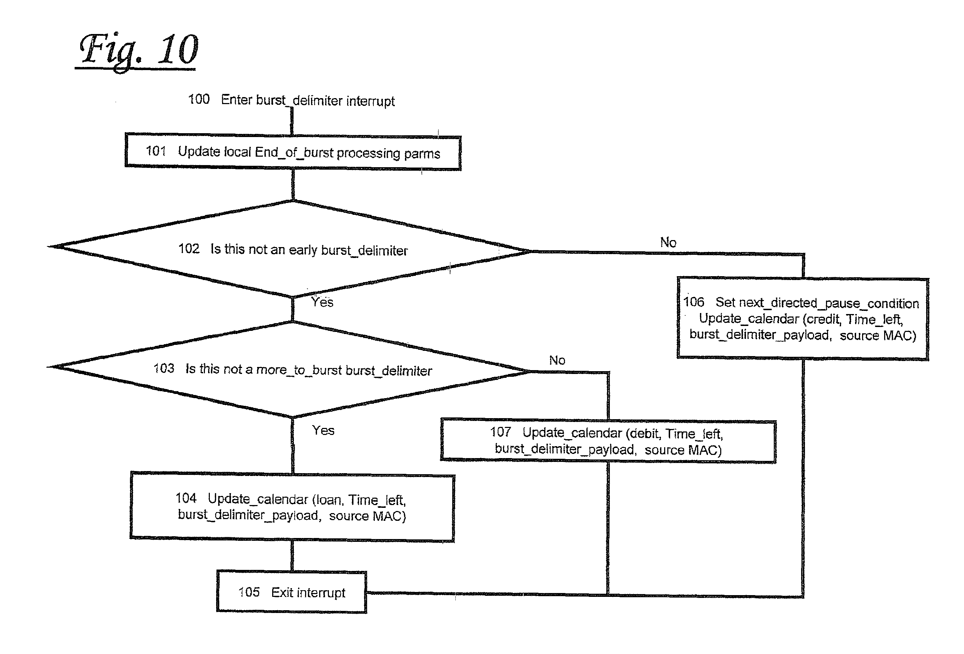

Referring now to Figure 10, a flow control method Is given for the head end receiving the upstream traffic, and in which the previously discussed burst delimiter message is processed and dynamic updates are made to the overall outstations upstream burst allocation schedule. Updates may affect current, next, or future allocated time slots for an individual outstation's committed and excessive service level agreement policy.

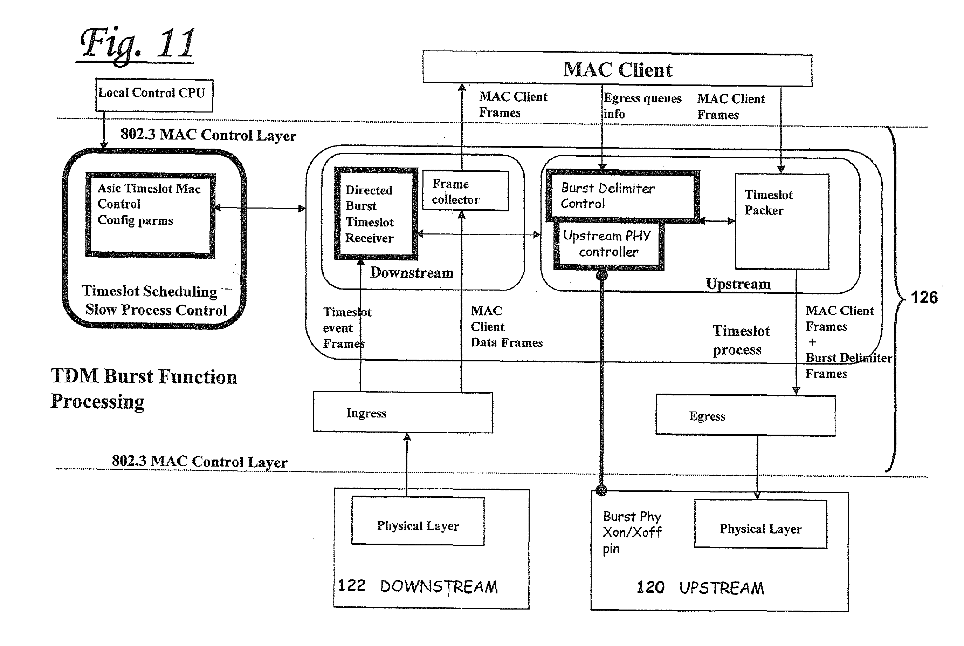

Referring now to Figure 11 there Is shown a more detailed outstation system perspective of how the various components associated In the burst method interact. These include upstream (PHY layer control and burst delimiter control) and downstream (directed burst and future configuration control) forwarding process interactions needed In the outstation MAC Control layer. It Illustrates how local ASIC configuration control parameters are set by the local CPU, or by a remote configuration control command interfaces to the Burst MAC Control Layer method.

Whilst the invention has been described above in terms of two broad embodiments employing respectively a combination of multi-cast pause and directed pause signals, and directed burst commands, it will be apparent to one skilled in the Art that other combinations of such messages is also both possible and practical.

It will also be apparent to one skilled in the Art that the methods described apply not just to tree-structured point-to-multipoint networks such as those illustrated in Figures 1 and 5, but also to those networks conventionally described as "ring" networks (or point to consecutive point networks as they are known in the field of wireless communication).

Any range or device value given herein may be extended or altered without losing the effect sought, as will be apparent to the skilled person for an understanding of the teachings herein.

Embodiments of the invention may be summarised as follows:

A method of marshalling upstream communications from a plurality of outstations to a head end in a communications network, the method comprising the steps of: sending from the head end a first command directed to a selected outstation allowing that one selected outstation to commence its upstream transmission for a time period indicated by the command; and, at least where the time period indicated is of indefinite duration, sending from the head end a second command directed at least to the selected outstation and indicating that the selected outstation should suspend transmission.

The time period may not be indefinite. The second command may be a command to all outstations to suspend transmission for a predetermined period, and may be accompanied by a multicast address.

The first command to the selected outstation may comprise a command to that outstation to pause its upstream transmission for a zero time period.

The first command may comprise a command to the selected outstation to pause its upstream transmission for a non-zero time period, and where the non-zero time period allows components in the transmission path to adapt to the operating conditions specific to the selected outstation before transmission of data commences.

Transmission of data frames downstream may be inhibited when there is insufficient time to transmit a further data frame before a next of the command frames is scheduled to be transmitted. Upstream and downstream traffic may have differing transmission rates.

The upstream and downstream transmissions may be carried on a guided medium, and the guided medium may be an optical medium in which different optical wavelengths are employed for respective downstream and upstream transmission.

The downstream and upstream transmissions may be carried as free space wireless transmissions.

A communications network comprising a head end coupled by respective communications paths to a plurality of outstations, in which the head end has means for marshalling upstream communications from the outstations via the transmission of downstream commands, which commands comprise a first command to a selected outstation allowing that one selected outstation to commence its upstream transmission for a time period indicated by the command followed, at least where the time period indicated is of indefinite duration, by a second command directed at least to the selected outstation and indicating that the selected outstation should suspend transmission.

The second command may be a command to all outstations to suspend transmission for a predetermined period. The second command may be accompanied by a multicast address. The first command to the selected outstation may comprise a command to that outstation to pause its upstream transmission for a zero time period. The first command may comprise a command to the selected outstation to pause its upstream transmission for a non-zero time period, and the non-zero time period may allow components in the transmission path to adapt to the operating conditions specific to the selected outstation before transmission of data commences.

A head end for a communications access network and arranged to provide marshalling of upstream communications from outstations coupled to the access network, the head end being arranged to transmit downstream to the outstations, information frames containing data traffic and command frames for marshalling upstream transmissions from the outstations which commands comprise a first command to a selected outstation allowing that one selected outstation to commence its upstream transmission for a time period indicated by the command followed, at least where the time period indicated is of indefinite duration, by a second command directed at least to the selected outstation and indicating that the selected outstation should suspend transmission.

Software in machine readable form for performing a method of marshalling upstream communications from a plurality of outstations to a head end in a communications network, the method comprising; sending from the head end a first command directed to a selected outstation allowing that one selected outstation to commence its upstream transmission for a time period indicated by the command; and, at least where the time period indicated is of indefinite duration, sending from the head end a second command directed at least to the selected outstation and indicating that the selected outstation should suspend transmission.

Medium access logic for a communications network arranged to receive at a first port a request to send a command to a selected outstation to allow it to commence transmission, and at a second port to cause the command to be sent to the selected outstation to begin transmission for a time period responsive thereto. The command may be directed to multiple outstations by means of a multicast address. The command may be an Ethernet protocol command.

A method of marshalling upstream communications from a plurality of outstations to a head end in a communications network, the method comprising; sending from the head end to the outstations a global command allowing no outstation to transmit to the head end for a pre-set period, and, within that pre-set period, sending a further command to a selected outstation overriding said global command allowing that one selected outstation to transmit to the head end. Said further command may comprise a pause command to the selected one outstation and having a zero time period associated therewith.

Said further command may comprise a pause command to the selected one outstation and having a nonzero time period associated therewith, where said non-zero time period allows components in the transmission path to adapt to the operating conditions specific to said selected one outstation before transmission of data commences.

A method of marshalling upstream communications to a head end from a plurality of outstations in a communications network, the method comprising transmitting downstream, from the head end to the outstations, data frames and command frames, wherein alternate command frames contain respectively, a global command to all outstations to pause upstream transmission for a pre-set time period, and a further command transmitted within said pre-set period to a selected outstation overriding said global command allowing that one selected outstation to transmit to the head end.

Said command to all outstations to pause transmission may be accompanied by a multicast address. Each said outstation may have a respective address, and said command to the selected outstation to commence transmission may be accompanied by the address of that outstation. The command to said selected outstation to commence its upstream transmission may comprise a command to that outstation to pause its upstream transmission for a zero time period.

The command to said selected outstation to commence its upstream transmission may comprise a command to that outstation to pause its upstream transmission for a non-zero time period, where said non-zero time period allows components in the transmission path to adapt to the operating conditions specific to said selected outstation before transmission of data commences. Said downstream and upstream transmissions may be carried on a guided medium.

A communications network comprising a head end coupled by respective communications paths to a plurality of outstations, wherein the head end has means for marshalling upstream communications from said outstations via the transmission of downstream commands, which commands comprise global commands allowing no outstation to transmit to the head end for a pre-set period, each said global command being followed within that pre-set period by a further command to a selected outstation overriding said global command allowing that one selected outstation to transmit upstream to the head end.

A communications network comprising a head end coupled by a passive optical fibre network paths to a plurality of outstations, wherein the head end is arranged to transmit downstream to the outstations, information frames containing data traffic and command frames for marshalling upstream transmissions from the outstations, wherein alternate command frames contain respectively, a global command to all outstations to pause upstream transmission for a pre-set time period, and a command addressed to a selected outstation overriding said global command and allowing that one selected outstation to transmit upstream to the head end.

The command to said selected outstation to commence its upstream transmit transmission may comprise a command to that outstation to pause its transmission for a zero time period.

The command to said selected outstation to commence its upstream transmission may comprise a command to that outstation to pause its upstream transmission for a non-zero time period, where said non-zero time period allows components in the transmission path to adapt to the operating conditions specific to said selected outstation before transmission of data commences. Different optical wavelengths may be used respectively for upstream and downstream transmission. Downstream transmissions from the head end may be carried on a plurality of optical wavelengths.

Said downstream and upstream transmissions may be carried as free space wireless transmissions.

A communications access network comprising, a head end, and a plurality of outstations coupled to the head end via an optical fibre medium incorporating a star coupler or splitter, wherein said head end is arranged to transmit downstream to the outstation a sequence of frames comprising data frames and command frames, wherein said command frames comprise first and second frames and provide marshalling control of upstream transmissions from the outstations, wherein the first command frame incorporates a global command to all outstations to pause upstream transmission for a pre-set time period, and wherein the second command frame is transmitted within said pre-set period and incorporates a further pause command having an associated zero time period and addressed to a selected outstation overriding said global command and allowing that one selected outstation to transmit to the head end.

A head end for a communications access network and arranged to provide marshalling of upstream communications from outstations coupled to the access network, the head end being arranged to transmit downstream to the outstations, information frames containing data traffic and command frames for marshalling upstream transmissions from the outstations, wherein alternate command frames contain respectively, a global command to all outstations to pause upstream transmission for a pre-set time period, and a command addressed to a selected outstation overriding said global command and allowing that one selected outstation to transmit to the head end.

Software in machine readable form for performing a method of marshalling upstream communications from a plurality of outstations to a head end in a communications network, the method comprising; sending from the head end to the outstations a global command allowing no outstation to transmit to the head end for a pre-set period, and, within that pre-set period, sending a further command to a selected outstation overriding said global command allowing that one selected outstation to transmit to the head end.

Medium access logic for a communications network arranged to receive at a first port a send pause request and at a second port to cause a command to be sent to a remote station to pause transmission for a time period responsive thereto.

Relative timing of transmitting the alternate command frames may be adjusted so as to reduce the length of guard band required between transmissions from different outstations.

Transmission of data frames downstream may be inhibited when there is insufficient time to transmit a further data frame before a next of the command frames is scheduled to be transmitted.

Upstream and downstream traffic may have differing transmission rates. A shared timeslot may occasionally be allocated in common to all outstations and during which outstations may register with the head end.

The timing of a downstream command frame may be determined responsive to a upstream command frame received from outstation and indicative of the volume of traffic available for upstream transmission from that outstation The upstream command frame may be indicative of the outstation currently having no more data to transmit.

The upstream command frame may be indicative of the outstation currently having more data to transmit than can be transmitted in the current timeslot.

The duration of upstream timeslots may be determined at the head end responsive to a upstream command frame received from an outstation and indicative of a measure of volume of traffic for upstream transmission from that outstation.

The second command may be indicative of a second time period during which the outstation to which it is directed should suspend transmission. The second time period may be indefinite.

A downstream signal in a communications network comprising a head end and a plurality of outstations, the signal comprising a first command directed to a selected outstation allowing that one selected outstation to commence its upstream transmission for a time period indicated by the command; and, at least where the time period indicated is of indefinite duration, a second command directed at least to the selected outstation and indicating that the selected outstation should suspend transmission.

An outstation for a communication access network arranged: to receive a first command directed to the outstation and commencing upstream transmission responsive thereto for no longer than a time period indicated by the command; and at least where the time period indicated is of indefinite duration, to receive a second command directed at least to the outstation and suspending transmission responsive thereto.

The outstation may be arranged to transmit responsive to the first, and optionally the second, command frame a command indicative of measure of volume of traffic for upstream transmission.

## Claims

1. An Ethernet transceiver, comprising:
an Ethernet signal source operable to generate an Ethernet signal;
a transmitter operably coupled to the Ethernet signal source and operable to transmit the Ethernet signal over a communications network; and
an Ethernet signal interrupter operably coupled to the transmitter and responsive to a control signal to interrupt transmission of the Ethernet signal by the transmitter.

2. An Ethernet transceiver as defined by claim 1, wherein:
the Ethernet signal source is operable to generate an idle pattern at intervals when it is not generating Ethernet data frames; and
the Ethernet signal interrupter is operable to interrupt transmission of at least some of the idle pattern over the communication network.

3. An Ethernet transceiver as defined by claim 1, wherein:
the transmitter is an optical transmitter comprising an optical source and means for modulating an optical output of the optical source responsive to the Ethernet signal; and
the Ethernet signal interrupter is operable to turn off the optical source to interrupt optical transmission of the Ethernet signal.

4. An Ethernet transceiver as defined by claim 3, wherein the optical source is a laser.

5. An Ethernet transceiver as defined by claim 4, wherein the Ethernet signal interrupter is operable to interrupt power supplied to the laser.

6. A method of operating an Ethernet transceiver, comprising:
operating an Ethernet signal source to generate an Ethernet signal;
operating a transmitter coupled to the Ethernet signal source to transmit the Ethernet signal over a communications network; and
operating an Ethernet signal interrupter coupled to the transmitter in response to a control signal to interrupt transmission of the Ethernet signal by the transmitter.

7. A method as defined by claim 6, wherein:
the Ethernet signal source is operable to generate an idle pattern at intervals when it is not generating Ethernet data frames; and
the Ethernet signal interrupter is operable to interrupt transmission of at least some of the idle pattern over the communication network.

8. A method as defined by claim 6, wherein:
the transmitter is an optical transmitter comprising an optical source and means for modulating an optical output of the optical source responsive to the Ethernet signal; and
the Ethernet signal interrupter is operable to turn off the optical source to interrupt optical transmission of the Ethernet signal.

9. A method as defined by claim 8, wherein the optical source is a laser:

10. A method as defined by claim 9, comprising operating the Ethernet signal interrupter interrupt power supplied to the laser.
